# EUROPÄISCHE PATENTSCHRIFT

(11) **EP 1 856 479 B1**
(45) Veröffentlichungstag und Bekanntmachung des Hinweises auf die Patenterteilung: **15.02.2012**
(21) Anmeldenummer: 05822315.7
(22) Anmeldetag: 10.12.2005
(51) Int. Cl.: G01C 21/26

(54) **VERFAHREN ZUR BEREITSTELLUNG EINER NAVIGATIONSINFORMATION**
METHOD FOR DELIVERING NAVIGATION INFORMATION
PROCEDE DE CREATION D'UNE INFORMATION DE NAVIGATION

(30) Priorität: 24.02.2005 DE 102005008395
(43) Veröffentlichungstag der Anmeldung: 21.11.2007
(73) Patentinhaber: Deutsche Telekom AG, 53113 Bonn (DE)
(72) Erfinder: SIMON, Dirk, 41516 Grevenbroich (DE)
(86) Internationale Anmeldenummer: PCT/EP2005/013263
(87) Internationale Veröffentlichungsnummer: WO 2006/089579

(56) Entgegenhaltungen:
- EP-A- 1 253 571
- DE-A1- 19 941 966
- US-A1- 2003 171 870
- US-A1- 2005 033 511

## Beschreibung

Die vorliegende Erfindung betrifft ein System sowie ein Verfahren zur Bereitstellung einer Navigationsinformation für einen Benutzer eines mobilen Telekommunikationsendgerätes mit GPS-Funktion, bei welchem ausgehend vom Telekommunikationsendgerät die Rufnummer eines Navigations-Mehrwertdienstanbieters (NavMwD) angerufen wird, und das nach Herstellung der Verbindung per Sprache oder Tastatureingabe über das Telekommunikationsendgerät eine zumindest einen Zielort umfassende Navigationsanfrage übermittelt wird, wonach durch den NavMwD die zumindest eine Routenberechnung umfassende Navigationsinformation durch Rückgriff auf angeschlossene, aktuelle Datenbanken errechnet wird.

Auf dem technischen Gebiet der Systeme für Orientierung und Navigation werden gemäß herrschender Lehre prinzipiell zwei Ansätze unterschieden, nämlich Onboard-Navigation versus Offboard-Navigation. Beiden Ansätzen ist gemein, dass nach Vorgabe eines gewünschten Zielorts der Weg ausgehend von einem manuell angegebenen oder automatisch über GPS (Global Positioning System) ist Position - ein Weg unter Beachtung des Straßennetzes ermittelt wird. Dies geschieht vornehmlich unter Verwendung von digitalen Straßenkarten. Die Präsentation des so ermittelten Weges, also die Routenführung, erfolgt in der Regel audiovisuell, d.h. über gesprochene Routenänderungshinweise, welche mit richtungsweisenden graphischen Symboliken visuell verbunden sind.

Aus der WO 2004/076977 A1 geht ein vorzugsweise für Kraftfahrzeuge einsetzbares Navigationssystem hervor, welches einer Onboard-Navigation realisiert. Dementsprechend ist die für Positionsbestimmung, Adresslokalisierung, Routenberechung und eigentliche Navigation benötigte Hard- und Software sowie die digitalen Karteninformationen in einem Telekommunikationsendgerät untergebracht. Als Telekommunikationsendgerät wird hier vorzugsweise ein PDA (Personal Digital Assistent) verwendet. Derartige Onboard-Systeme werden gewöhnlich von Kunden käuflich erworben und stehen ihm zur freien uneingeschränkten Nutzung zur Verfügung, d.h. Betriebskosten durch Bezug externer Navigationsdaten entfallen. Jedoch ist es erforderlich, die aktuelle Software mit den aktuellen digitalen Karteninformationen zu nutzen, wozu in der Praxis gewöhnlich entsprechende Updates zur Verfügung stehen.

Aus der EP 1 139 317 A2 geht dagegen ein Offboard-System als Navigationssystem hervor. Dies bietet gegenüber dem vorstehend erläuterten Onboard-System den Vorteil, dass dem Benutzer stets ein aktueller Datenbestand zur Navigation zur Verfügung steht. Dies wird dadurch erreicht, in dem nach Eingabe eines gewünschten Zielorts ausgehend von aktuellen Startposition von einer Zentrale eine Route von der Startposition zum gewünschten Zielort berechnet wird, die in Form von aufeinanderfolgenden Wegpunkten von der Zentrale an den Benutzer übertragen wird, der über sein Telekommunikationsendgerät die Route unter Berücksichtigung der fortlaufend ermittelten momentanen Ortkoordinaten in Form von Weghinweisen ausgegeben wird. Vorteilhaft bei derartigen Offboard-Systemen ist, das der Benutzer neben dem reinen digitalen Kartendaten auch weitere aktuelle Informationen - beispielsweise über Tankstellen oder Sehenswürdigkeiten - sowie auch aktuelle Verkehrsdaten, welche für die Orientierung und Routenführung relevant sein können, von der Zentrale beziehen kann.

US 2005/033511 A1 offenbart die Übertragung von Navigationsinformationen in Form von Java - Applets vom Server zum Telekommunikationsendgerät.

Besitzt der Benutzer eines Offboard-Systems zur Navigation die hardwaremäßigen Vorraussetzungen zur Nutzung der Navigation - beispielsweise in Form eines Mobiltelefons mit integriertem GPS-Empfänger - so benötigt der Benutzer zusätzlich auch noch die entsprechende Navigationssoftware des Navigationsdienstanbieters. Für die Nutzung des klassischen Offboard-Systems fallen im Gegensatz zur reinen Onboard-Systemen zusätzliche Kosten, wie Verbindungskosten sowie Datenkosten an. Es ist daher ein eigenständiges Vertragsverhältnis zwischen dem Benutzer und den Dienstanbieter als Vorraussetzung für die Dienstnutzung erforderlich, was eine Kunden-Authentifizierung vor jeder Nutzung sowie entsprechenden Aufwand für Rechnungsstellung und Verwaltung mit sich bringt.

Es ist daher die Aufgabe der vorliegenden Erfindung ein Verfahren sowie ein System zu Bereitstellung einer Navigationsinformation für einen Benutzer eines mobilen Telekommunikationsendgeräts mit GPS-Funktion zu schaffen, das ohne vorinstallierte Software auskommend eine ablauftechnisch stark vereinfachte Form der Navigation nach den Prinzip eines Offboard-Systems ermöglicht.

Die Aufgabe wird ausgehend von einem Verfahren gemäß dem Oberbegriff von Anspruch 1 in Verbindung mit dessen kennzeichnenden Merkmalen gelöst. In systemtechnischer Hinsicht wird die Aufgabe nach Anspruch 8 gelöst. Die jeweils rückbezogenen abhängigen Ansprüche geben vorteilhafte Weiterbildungen der Erfindung wieder.

Die Erfindung schließt die verfahrenstechnische Lehre ein, dass die nach dem Prinzip des Offboard-Systems zentral durch den NavMwD errechnete Navigationsinformation mit einem selbstlauffähigen Navigations-Programmcode verknüpft und durch den NavMwD zum Abruf bereitgestellt wird, und dass der die errechnete Navigationsinformation enthaltene selbstlauffähige Navigations-Programmcode nach erfolgten Abruf durch den Benutzer auf dessen Telekommunikationsendgerät zur Durchführung der Navigation gestartet wird.

Der Vorteil der erfindungsgemäßen Lösung liegt insbesondere darin, dass der Benutzer nicht eine spezielle, auf seinem mobilen Telekommunikationsendgerät installierte Navigationssoftware benötigt, um Navigationsdienstleistungen in Anspruch zu nehmen. Somit muss der Benutzer sich nicht mehr mit Installations-Bedienung und Betrieb einer solchen Navigationssoftware auseinandersetzen, was die Navigation für den Benutzer ablauftechnisch stark vereinfacht und somit besonders benutzerfreundlich gestaltet. Es findet also eine Art "Navigation-on-demand" statt, die von der Kernidee einer vertragsunabhängigen Spontannutzung ausgeht und sich dabei an einer Art Einweglösung orientiert. Denn die vom NavMwD zu der speziellen Navigationsanfrage gelieferte Navigationsinformation ist nach Nutzung derselben aufgebraucht und kann vom mobilen Telekommunikationsendgerät schlussendlich gelöscht werden. Die erfindungsgemäße Lösung hebt damit die ansonsten übliche Trennung von Softwareprogramm und Inhalt auf. Denn es wird der Inhalt (errechnete Navigationsinformation) mit dem Softwareprogramm (selbstlauffähiger Navigations-Programmcode) zu einem Paket verschmolzen, was die Vorraussetzung für das "Navigation-on-demand" Konzept schafft. Und für einen Mehrwertdienst - wie etwas Java-Games - für mobile Telekommunikationsendgeräte nutzbar macht. Die Nutzung erfolgt dabei durch Abruf des Benutzers, in dem dieser die Rufnummer des NavMwD's wählt seine Navigationsanfrage stellt. Der Navigations-Programmcode kann als Java-Applikation ausgeführt sein, um durch diesen Standard den Mehrwertdienst unabhängig vom Herstellen des mobilen Telekommunikationsendgeräts anbieten zu können. Der die Navigationsinformation enthaltende selbstlauffähige Navigations-Programmcode wird per Online-Verbindung auf das Telekommunikationsendgerät übertragen und lässt sich daraufhin ggf. entpacken und nutzen. Die Dienstleistung Navigation lässt sich damit erstmals fast wie normaler digitaler Content, wie Java-Games anbieten. Somit braucht der Benutzer bei der erfindungsgemäßen Lösung lediglich ein mobiles Telekommunikationsendgerät mit einem GPS-Empfänger, um die für eine Navigation erforderliche Lokalisierungsfunktion durchzuführen. Wertvolle Speicherkapazität eines mobilen Telekommunikationsendgeräts wird nicht durch Applikationsdaten belegt. Die erfindungsgemäße Lösung ist unabhängig von Authentifizierungs-Rechnungsstellungssystemen, durch deren Wegfall die Navigationsdienstleistung besonders einfach nutzbar wird, was zu einer Erhöhung der Dienstverfügbarkeit führt. Von der erfindungsgemäßen Lösung ausgehend ist es auch denkbar, weitere artverwandte Abruf-Services auf diese Art und Weise bereitzustellen, wie etwa ein Abruf von Ausflugsrouten, Sehenswürdigkeitenführer oder Radarfallenwarner etc..

Vorzugsweise wird zum Abruf des die errechnete Navigationsinformation enthaltenen selbstlauffähigen Navigations-Programmcodes ein entsprechender Download-Link an den Benutzer gesendet. Dies kann beispielsweise via SMS erfolgen. Durch den am mobilen Telekommunikationsendgerät angezeigte SMS-Eingang wird dem Benutzer signalisiert, dass er nunmehr die angefragte Navigation starten kann.

Die Kontaktaufnahme mit den NavMwD zwecks Navigationsanfrage ist auf verschiedene Arten denkbar. So kann sich seitens des NavMwD ein Operator, also ein Servicemitarbeiter, oder ein Spracherkennungscomputer melden, der mit dem Benutzer zur Navigationsanfrage sprachkommuniziert. Daneben ist es auch denkbar, das der Benutzer NavMwD per SMS-Protokoll oder dergleichen kontaktiert, wobei die vom Benutzer gesendete SMS oder dergleichen die Navigationsanfrage enthält. Realisieren ließe sich diese alternative Ausführungsform beispielsweise durch eine sogenannte Premium-SMS, deren Format "Rufnummer/Startort/Zielort" sein könnte. Es ist ebenfalls möglich, den NavMwD über Web-WAP-Protokoll zu kontaktieren, wobei in das Web-WAP-Formular die Navigationsanfrage eingegeben wird, welche zu diesem Zwecke entsprechende Formularfelder bereitstellt.

Gemäß einer weiteren die Verbindung verbessernde Maßnahme kann die Verbindung zwischen dem mobilen Telekommunikationsendgerät und dem NavMwD nach Übermittelung der Navigationsanfrage durch den Benutzer beendet werden. Dies spart Verbindungskosten. Natürlich ist es auch denkbar, die Verbindung solange aufrechtzuhalten, bis als Rückantwort der selbstlauffähige, die Navigationsinformation enthaltende Navigations-Programmcode an das Telekommunikationsendgerät gesendet ist.

Die Navigationsanfrage umfasst erfindungsgemäß zumindest den gewünschten Zielort. Zusätzlich hierzu ist auch möglich, einen gewünschten Startort, welcher sich vom aktuellen über die GPS-Funktion des Telekommunikationsendgerätes bestimmbare Standortesbenutzers unterscheiden kann, enthält. Optional können auch gewünschte Zwischenstopporte oder Sonderziele Bestandteil der Navigationsanfrage sein.

Weitere die Erfindung verbessernde Maßnahmen werden nachstehend gemeinsam mit der Beschreibung eines bevorzugten Ausführungsbeispiels der Erfindung anhand der Zeichnung näher dargestellt. Es zeigt:
- Figur 1: eine schematische Darstellung eines Systems zur Bereitstellung einer Navigationsinformation, und
- Figur 2: eine Darstellung der Verfahrensschritte, welche das System nach Figur 1 nutz.

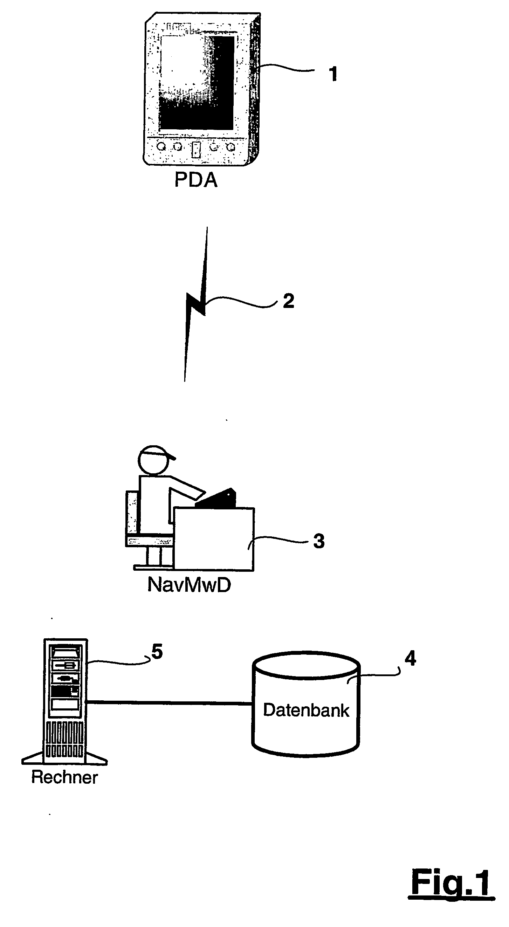

Gemäß Figur 1 umfasst ein System zur Bereitstellung einer Navigationsinformation ein mobiles Telekommunikationsendgerät, das hier nach Art eines PDA ausgebildet ist und mit einem integrierten GPS-Empfänger versehen ist. Mit dem im mobilen Telekommunikationsendgerät 1 integriertem GPS-Empfänger lässt sich die aktuelle Position des mobilen Telekommunikationsendgerät 1, also des Benutzers, stets feststellen. Das mobile Telekommunikationsendgerät 1 kann via Mobilfunknetz 2 die Verbindung mit einem Navigations-Mehrwertdienstanbieter (NavMwD) aufnehmen, indem der Benutzer über das mobile Telekommunikationsendgerät 1 die Rufnummer des NavMwD 3 wählt. Seitens des NavMwD 3 meldet sich ein Operator, welcher die Navigationsanfrage aufnimmt, wonach die Verbindung zum mobilen Telekommunikationsendgerät 1 beendet wird. Der NavMwD 3 führt nun durch Rückgriff auf eine angeschlossene aktuelle Datenbank 4 unter Verwendung eines Navigationsrechners 5 die Routenberechnung durch. Anschließend verknüpft der Navigationsrechner 5 die errechnete Navigationsinformation mit einem selbstlauffähigem Navigations-Programmcode (Java-Applikation) und stellt diese zum Abruf bereit, indem ein Download-Link per SMS über das Mobilfunknetz 2 an das mobile Telekommunikationsgerät 1 gesendet wird. Schließlich wird der die errechnete Navigationsinformation enthaltene selbstlauffähige Navigations-Programmcode nach erfolgter Übertragung durch entsprechenden Abruf auf dem mobilen Telekommunikationsendgerät 1 zur Durchführung der Navigation gestartet. Nachdem der Benutzer zum gewünschten Zielort navigiert worden ist, erfolgt eine automatische Löschung des nun hinfälligen Navigations-Programmcodes mit den Navigationsinformationen.

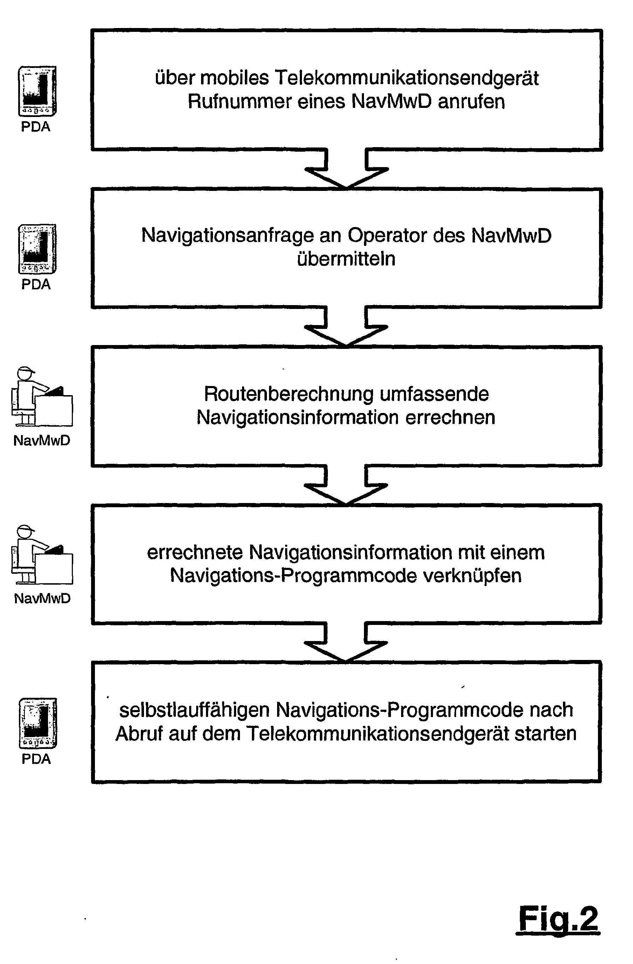

Die Figur 2 illustriert den vorstehend geschilderten Ablauf noch einmal anhand der Hauptverfahrensschritte.

Die vorliegende Erfindung beschränkt sich nicht auf das vorstehend beschriebene konkrete Ausführungsbeispiel. Es sind vielmehr auch Abwandlungen hiervon denkbar, welche vom Schutzumfang der nachfolgenden Ansprüche umfassen. So kann anstelle eines Telekommunikationsendgeräts mit integrierte GPS-Funktion auch ein mobiles Telekommunikationsendgerät - beispielsweise ein Mobilfunktelefon genutzt werden, an welches ein separater GPS-Empfänger anschließbar ist. Es ist auch denkbar, dass ein mobiler Laptop oder dergleichen als mobiles Telekommunikationsendgerät genutzt wird, wobei über eine WALN-Verbindung die Kontaktaufnahme zum NavMwD erfolgen kann. Neben einer reinen Routeninformation kann die vom NavMwD bezogene Information auch andere positions- oder routenabhängige Information enthalten, wie beispielsweise Radarkontrolleninformationen oder Reiseführerinformationen und dergleichen.

### Bezugszeichenliste

- 1: mobiles Telekommunikationsendgerät
- 2: Mobilfunknetz
- 3: Navigations-Mehrwertdienstanbieter (NavMwD)
- 4: Datenbank
- 5: Navigationsrechner

## Patentansprüche

1. Verfahren zur Bereitstellung einer Navigationsinformation für einen Benutzer eines mobilen Telekommunikationsendgerätes (1) mit GPS-Funktion, bei welchem:
- ausgehend vom mobilen Telekommunikationsendgerät (1) die Rufnummer eines Navigations-Mehrwertdienstanbieters (3) angerufen wird, und dass
- nach Herstellung der Verbindung per Sprache oder Tastatureingabe über das Telekommunikationsendgerät (1) eine zumindest einen Zielort umfassend Navigationsanfrage übermittelt wird,
- wonach durch den Navigations-Mehrwertdienstanbieter (3) die zumindest eine Routenberechnung umfassende Navigationsinformation durch Rückgriff auf angeschlossene, aktuelle Datenbanken (4) errechnet wird,
**dadurch gekennzeichnet, dass** in Orientierung an eine Einweglösung
- die errechnete Navigationsinformation durch den Navigations-Mehrwertdienstanbieter (3) mit einem selbstlauffähigen Navigations-Programmcode verknüpft und zum Abruf bereitgestellt wird, und dass
- der die errechnete Navigationsinformation enthaltene selbstlauffähige Navigations-Programmcode nach erfolgtem Abruf durch den Benutzer auf dem Telekommunikationsendgerät (1) zur Durchführung der Navigation gestartet wird, und nachdem der Benutzer zum gewünschten Zielort navigiert worden ist, vom Telekommunikationsendgerät (1) automatisch gelöscht wird.

2. Verfahren nach Anspruch 1,
**dadurch gekennzeichnet, dass** zum Abruf des die errechnete Navigationsinformation enthaltenen selbstlauffähigen Navigations-Programmcodes ein entsprechender Download-Link an den Benutzer gesendet wird.

3. Verfahren nach Anspruch 1 oder 2,
**dadurch gekennzeichnet, dass** beim Navigations-Mehrwertdienstanbieter (3) ein Operator oder ein Spracherkennungscomputer angerufen wird, der mit dem Benutzer zur Navigationsanfrage sprachkommuniziert.

4. Verfahren nach Anspruch 1 oder 2,
**dadurch gekennzeichnet, dass** der Navigations-Mehrwertdienstanbieter (3) über SMS-Protokoll kontaktiert wird, wobei die vom Benutzer gesendete SMS die Navigationsanfrage enthält.

5. Verfahren nach Anspruch 1 oder 2,
**dadurch gekennzeichnet, dass** der Navigations-Mehrwertdienstanbieter (3) über Web/WAP-Protokoll kontaktiert wird, wobei in das Web/WAB-Formular die Navigationsanfrage eingegeben wird.

6. Verfahren nach Anspruch 1,
**dadurch gekennzeichnet, dass** die über ein Mobilfunknetz (2) aufgenommene Verbindung zwischen Telekommunikationsendgerät (1) und Navigations-Mehrwertdienstanbieter (3) nach Übermittlung der Navigationsanfrage beendet wird.

7. Verfahren nach Anspruch 1,
**dadurch gekennzeichnet, dass** die Navigationsanfrage neben dem Zielort auch den gewünschten Startort und/oder einen gewünschten Zwischenstopport umfasst.

8. System zur Bereitstellung einer Navigationsinformation für einen Benutzer eines mobilen Telekommunikationsendgerätes (1) mit GPS-Funktion bei welchem:
- das mobile Telekommunikationsendgerät (1) ausgebildet ist, eine Verbindung mit einem Navigations-Mehrwertdienstanbieter (3) herzustellen, welcher ausgebildet ist,
- per Sprache oder Tastatureingabe über das Telekommunikationsendgerät (1) eine zumindest einen Zielort umfassende Navigationsanfrage zu empfängen, und
- die zumindest eine Routenberechnung umfassende Navigationsinformation durch Rückgriff auf angeschlossene, aktuelle Datenbanken (4) zu errechnen,
**dadurch gekennzeichnet, dass** in Orientierung an eine Einweglösung:
- ein Navigationsrechner (5) des Navigations-Mehrwertdienstanbieters (3) ausgebildet ist, die errechnete Navigationsinformation mit einem selbstlauffähigen Navigations-Programmcode zu verknüpfen und diesen zum Abruf bereitzustellen, wobei
- der die errechnete Navigationsinformation enthaltene selbstlauffähige Navigations-Programmcode nach erfolgtem Abruf durch den Benutzer auf dem Telekommuniltationsendgerät (1) zur Durchführung der Navigation, gestartet wird, und wobei bereitzustellen nachdem der Benutzer zum gewünschten Zielort navigiert worden ist, vom Telekommunikationsendgerät (1) den Navigations-Programmcode automatisch gelöscht wird.

9. System nach Anspruch 8,
**dadurch gekennzeichnet, dass** die Übersendung des Download-Links per SMS über das Mobilfunknetz (2) erfolgt.

10. System nach Anspruch 8 oder 9,
**dadurch gekennzeichnet, dass** die GPS-Funktion im mobilen Telekommunikationsendgerät (1) hardwaremäßig integriert ist oder das Telekommunikationsendgerät (1) mit einem separaten GPS-Empfänger verbunden ist.

11. System nach Anspruch 8,
**dadurch gekennzeichnet, dass** das mobilen Telekommunikationsendgerät (1) nach Art eines Mobilfunktelefons, eines PDA's oder eines drahtloskommunikationsfähigen Laptops jeweils entweder mit integriertem oder angeschlossenem GPS-Empfänger ausgebildet ist.

12. System nach Anspruch 8,
**dadurch gekennzeichnet, dass** die Navigationsinformation neben Routeninformationen auch Radarkontrolleninformationen und/oder Reiseführerinformationen umfasst.

## Claims

1. Method for providing navigation information for a user of a mobile telecommunications terminal (1) with GPS functionality, in which:
- the call number of a navigation value-added service provider (3) is called from the mobile telecommunications terminal (1), and in that
- a navigation query comprising at least one destination is communicated through the mobile telecommunications terminal (1) by speech or keyboard input after the establishment of the connection,
- after which the navigation information comprising at least one route calculation is calculated by the navigation value-added service provider (3) by access to current, connected databases (4),
**characterized in that**, in orientation to a single-use solution,
- the calculated navigation information is attached to a self-executing navigation program code by the navigation value-added service provider (3) and prepared for retrieval, and **in that**
- once retrieval by the user is completed, the self-executing navigation program code containing the calculated navigation information is started on the telecommunications terminal (1) to carry out the navigation, and once the user has been navigated to the desired destination, is automatically deleted from the telecommunications terminal (1).

2. Method according to claim 1,
**characterized in that** an appropriate download link is sent to the user for retrieving the self-executing navigation program code containing the calculated navigation information.

3. Method according to claim 1 or 2,
**characterized in that** an operator or a speech recognition computer that communicates by speech with the user for the navigation query is called at the navigation value-added service provider (3).

4. Method according to claim 1 or 2,
**characterized in that** the navigation value-added service provider (3) is contacted via SMS protocol, wherein the SMS sent by the user contains the navigation query.

5. Method according to claim 1 or 2,
**characterized in that** the navigation value-added service provider (3) is contacted via Web/WAP protocol, wherein the navigation query is entered in the Web/WAP form.

6. Method according to claim 1,
**characterized in that** the connection between the telecommunications terminal (1) and the navigation value-added service provider (3) that was established through a mobile telephone network is terminated after transmission of the navigation query.

7. Method according to claim 1,
**characterized in that** the navigation query comprises the desired starting location and/or a desired intermediate stop location in addition to the destination.

8. System for providing navigation information for a user of a mobile telecommunications terminal (1) with GPS functionality in which:
- the mobile telecommunications terminal (1) is designed to establish a connection with a navigation value-added service provider (3), which is designed
- to receive, by speech or keyboard input through the telecommunications terminal (1), a navigation query comprising at least one destination, and
- to calculate the navigation information comprising at least one route calculation by access to current, connected databases (4),
**characterized in that**, in orientation to a single-use solution:
- a navigation computer (5) of the navigation value-added service provider (3) is designed to attach the calculated navigation information to a self-executing navigation program code and to prepare the same for retrieval, wherein
- once retrieval by the user is completed, the self-executing navigation program code containing the calculated navigation information is started on the telecommunications terminal (1) to carry out the navigation, and wherein, once the user has been navigated to the desired destination, the navigation program code is automatically deleted from the telecommunications terminal (1).

9. System according to claim 8,
**characterized in that** the transmission of the download link by SMS takes place over the mobile telephone network (2).

10. System according to claim 8 or 9,
**characterized in that** the GPS functionality is integrated into the mobile telecommunications terminal (1) as hardware or the mobile telecommunications terminal (1) is connected to a separate GPS receiver.

11. System according to claim 8,
**characterized in that** the mobile telecommunications terminal (1) is designed in the manner of a cellular phone, a PDA, or a laptop with wireless communication capability, in each case with either an integrated or an attached GPS receiver.

12. System according to claim 8,
**characterized in that** the navigation information also contains information on radar speed checks and/or travel guide information in addition to route information.

## Revendications

1. Procédé de fourniture d'une information de navigation destinée à un utilisateur d'un terminal de télécommunication mobile (1) comportant une fonction GPS, dans lequel :
- le numéro d'appel d'un fournisseur de services de navigation à valeur ajoutée (3) est appelé à partir du terminal de télécommunication mobile (1), et en ce que,
- après établissement de la connexion par commande vocale ou saisie clavier via le terminal de télécommunication (1), une requête de navigation comprenant au moins une destination est transmise,
- le fournisseur de services de navigation à valeur ajoutée (3) calcule ensuite l'information de navigation comprenant au moins un calcul de l'itinéraire en ayant recours à des bases de données (4) actualisées connectées,
**caractérisé en ce que**, en se basant sur une solution unidirectionnelle,
- l'information de navigation calculée est reliée à un code de programme de navigation auto-exécutable par le fournisseur de services de navigation à valeur ajoutée (3) et mise à disposition pour être consultée, et **en ce que**,
- après avoir été consulté par l'utilisateur, le code de programme de navigation auto-exécutable contenant l'information de navigation calculée est déclenché sur le terminal de télécommunication (1) pour la réalisation de la navigation, et supprimé automatiquement par le terminal de télécommunication (1) une fois que l'utilisateur a été guidé vers la destination souhaitée.

2. Procédé selon la revendication 1, **caractérisé en ce que** pour consulter le code de programme de navigation auto-exécutable contenant l'information de navigation calculée, un lien de téléchargement correspondant est envoyé à l'utilisateur.

3. Procédé selon la revendication 1 ou 2, **caractérisé en ce qu'**un opérateur ou un ordinateur de reconnaissance vocale est appelé au sein du fournisseur de services de navigation à valeur ajoutée (3), qui communique vocalement avec l'utilisateur pour la requête de navigation.

4. Procédé selon la revendication 1 ou 2, **caractérisé en ce que** le fournisseur de services de navigation à valeur ajoutée (3) est contacté via un protocole SMS, le SMS envoyé par l'utilisateur contenant la requête de navigation.

5. Procédé selon la revendication 1 ou 2, **caractérisé en ce que** le fournisseur de services de navigation à valeur ajoutée (3) est contacté via un protocole Web/WAP, la requête de navigation étant entrée dans le formulaire Web/WAP.

6. Procédé selon la revendication 1, **caractérisé en ce que** la connexion établie entre le terminal de télécommunication (1) et le fournisseur de services de navigation à valeur ajoutée (3) via un réseau de radiocommunication mobile (2) est terminée après la transmission de la requête de navigation.

7. Procédé selon la revendication 1, **caractérisé en ce que**, outre la destination, la requête de navigation comprend également le lieu de départ souhaité et/ou un point d'arrêt intermédiaire souhaité.

8. Système de fourniture d'une information de navigation destinée à un utilisateur d'un terminal de télécommunication mobile (1) comportant une fonction GPS, dans lequel:
- le terminal de télécommunication mobile (1) est conçu pour établir une connexion avec un fournisseur de services de navigation à valeur ajoutée (3) conçu
- pour recevoir une requête de navigation comprenant au moins une destination par commande vocale ou saisie clavier via le terminal de télécommunication (1), et
- pour calculer l'information de navigation comprenant au moins un calcul d'itinéraire en ayant recours à des bases de données (4) actualisées connectées,
**caractérisé en ce que**, en se basant sur une solution unidirectionnelle :
- un ordinateur de navigation (5) du fournisseur de services de navigation à valeur ajoutée (3) est conçu pour relier l'information de navigation calculée à un code de programme de navigation auto-exécutable et pour le mettre à disposition pour être consulté,
- après avoir été consulté par l'utilisateur, le code de programme de navigation auto-exécutable contenant l'information de navigation calculée étant déclenché sur le terminal de télécommunication (1) pour la réalisation de la navigation, et supprimé automatiquement par le terminal de télécommunication (1) une fois que l'utilisateur a été guidé vers la destination souhaitée.

9. Système selon la revendication 8, **caractérisé en ce que** la transmission du lien de téléchargement s'effectue par SMS via le réseau de télécommunication mobile (2).

10. Système selon l'une des revendications 8 ou 9, **caractérisé en ce que** la fonction GPS est intégrée matériellement au terminal de télécommunication mobile (1) ou **en ce que** le terminal de télécommunication (1) est relié à un récepteur GPS séparé.

11. Système selon la revendication 8, **caractérisé en ce que** le terminal de télécommunication (1) mobile est de type téléphone de radiocommunication mobile, PDA ou ordinateur portable communiquant par l'intermédiaire du réseau sans fil, respectivement équipé d'un récepteur GPS intégré ou connecté.

12. Système selon la revendication 8, **caractérisé en ce que**, outre les informations d'itinéraire, l'information de navigation comprend également des informations de contrôle radar et/ou de guide de voyage.
